# EUROPÄISCHE PATENTANMELDUNG

(11) **EP 1 008 549 A2**
(43) Veröffentlichungstag der Anmeldung: **14.06.2000**
(21) Anmeldenummer: 98123428.9
(22) Anmeldetag: 09.12.1998
(51) Int. Cl.: B66C 23/42, B66C 23/80, B62D 33/063

(54) **Kranfahrzeug**

(71) Anmelder: Compact Truck AG, 6300 Zug (CH); Lutz, Franz, 89584 Ehingen (DE); Kaspar, Ernst, 89597 Munderkingen (DE)
(72) Erfinder: Kaspar, Ernst, 89597 Munderkingen (DE)
(74) Vertreter: Grünecker, Kinkeldey, Stockmair & Schwanhäusser Anwaltssozietät

(57) **Zusammenfassung**

Ein Kranfahrzeug weist eine 4-Punkt-Abstützung auf, welche sich quer zur Fahrzeugachse erstreckende Abstützträger (21,23,41) aufweist, die direkt im Fahrzeug-Längsrahmen (11) gelagert sind. In diesen Abstützträgern (21,23,41) können ausfahrbare, innere Abstützträger (20,22,40) verschieblich gelagert sein, an deren freiem Ende jeweils ein Abstützzylinder (14-17) sitzt.

## Beschreibung

Die Erfindung (Neuerung) betrifft selbstfahrende Kranfahrzeuge der im Oberbegriff des Anspruchs 1 angegebenen Gattung und beinhaltet ferner insbesondere eine neue Rahmen- und Abstützungskonstruktion mit besonderer Eignung für Kranfahrzeuge.

Selbstfahrende Kranfahrzeuge müssen eine Vielzahl von Forderungen erfüllen, um zum Verkehr auf öffentlichen Fernstraßen zugelassen zu werden. In Deutschland sind diesbezüglich die Bestimmungen der StVZO (Straßenverkehrs-Zulassungs-Ordnung) maßgeblich.

Zu diesen Forderungen zählen eine Mindestdauergeschwindigkeit auf öffentlichen Straßen von 62 km/h und ein Sichtkreisdurchmesser für den Fahrer mit einem Radius R ≤ 12 m. Um ohne Begleitung durch die Verkehrspolizei fahren zu dürfen, soll die maximale Breite des Kranfahrzeuges nicht mehr als < 3 m betragen. Wegen der beschränkten Durchfahrtshöhe von Straßenbrücken soll die Gesamthöhe des Kranfahrzeuges im Fahrzustand ≤ 4,0 m betragen. Auch hinsichtlich des Eigengewichtes bestehen wegen der begrenzten Belastbarkeit von Brücken bestimmte Beschränkungen.

Kranfahrzeuge haben ein Fahrgestell mit einem sich in Fahrzeuglängsrichtung erstreckenden stabilen Rahmen, der in der Fahrzeugmitte verläuft. Unterhalb dieses Rahmens verlaufen bei den meisten herkömmlichen Konstruktionen die Achsen von wenigstens zwei Radpaaren, die zum Teil antreibbar und lenkbar sind. Die Räder sind mit Hilfe geeigneter Radaufhängungen an dem Rahmen befestigt.

Mit dem Rahmen verbunden sind auch die für den Kranbetrieb unverzichtbaren Abstützungen, auf welchen das Kranfahrzeug im Kranbetrieb ruht. Bei der üblichen 4-Punkt-Abstützung sind vier ausfahrbare bzw. verschwenkbare Abstützholme vorgesehen, an deren freien Enden je ein hydraulischer Abstützzylinder und ein Stützteller vorgesehen sind. Die herkömmlichen Abstützholme werden in Querrichtung zur Rahmenlängsachse soweit ausgefahren bzw. verschwenkt, daß der Kranfahrzeug beim Heben von Lasten eine hinreichende Kippstabilität besitzt. Üblicherweise sind zwei in Gegenrichtung zueinander ausfahrbare Abstützholme im Bereich des vorderen Fahrzeugrahmenendes und zwei in Gegenrichtung zueinander ausfahrbare Abstützholme im Bereich des hinteren Fahrzeugrahmenendes vorgesehen.

Oberhalb des Rahmens und von diesem abgestützt, ist ein Kugeldrehkranz vorgesehen, auf welchem die Gesamtheit des Kranoberwagens gelagert ist. Der Kranoberwagen hat einen als Drehbühne bezeichneten Rahmen, auf weichem der Kranmast (Ausleger) mit seinem Anlenkstück und seinen Teleskopteilen sowie das den Kranmast aufrichtende Wippwerk gelagert sind. Selbstredend verfügt jedes selbstfahrende Kranfahrzeug über geeignete Antriebs- und Lenkungseinrichtungen für das Fahrgestell, Antriebseinrichtungen für die Drehbühne sowie über Einrichtungen zum Betreiben des Wippwerkes und zum Aus- und Einteleskopieren der Teleskopteile sowie zum Heben und Senken von Lasten.

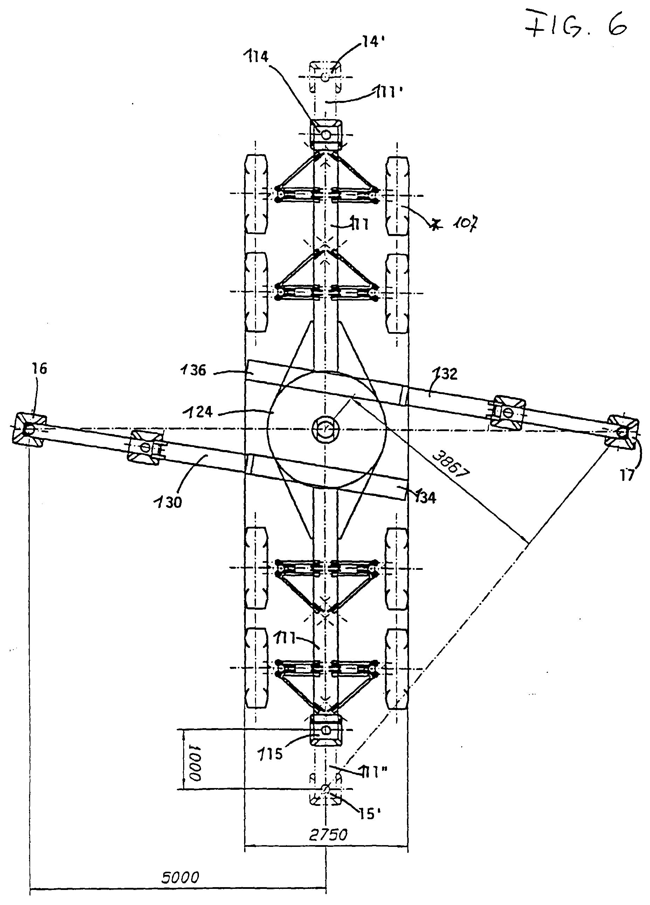

Fig. 6 zeigt eine insbesondere für Kranfahrzeuge mit Traglasten bis zu etwa 400 t geeignete 4-Punkt-Abstützung. Dargestellt ist der sich in Fahrzeuglängsrichtung erstreckende Fahrzeugrahmen 111, welcher an seinem vorderen Ende eine vordere Abstützung 114 und an seinem hinteren Ende eine hintere Abstützung 115 aufweist. Die Abstützungen 114 und 115 sind an hydraulisch ausfahrbaren Stützholmen 111' und 111'' befestigt. Diese Stützholme lassen sich in Rahmenlängsrichtung jeweils um etwa 1 m ausfahren.

Im Bereich der Lagerung des Drehkranzes 124 sind ein linker Abstützholm 130 und ein rechter Abstützholm 132 gelagert. Diese beiden Abstützholme sind im entgegengesetzten Richtungssinn aus Aufnahmekästen 134 bzw. 136 in die gezeigten Betriebsstellungen ausfahrbar und sind an ihren freien Enden mit Abstützungen 116 bzw. 177 versehen. Mit dem Bezugszeichen 107 sind in Fig. 6 die acht Räder eines vierachsigen Kranfahrzeuges bezeichnet.

Im Kranbetrieb ruht ein jedes Kranfahrzeug allein auf den Abstützzylindern, die die jeweiligen Reaktionskräfte aufnehmen, während die Fahrzeugräder vom Untergrund abgehoben sind.

Die bekannte Kranfahrzeug-Abstützung gemäß Fig. 6 beinhaltet konstruktionsbedingte große Vorteile, aber ist doch relativ aufwendig in der Herstellung und Wartung.

Der Erfindung liegt deshalb die Aufgabe zugrunde, einen Fahrzeugkran bzw. eine 4-Punkt-Abstützung für Fahrzeugkrane zu schaffen, dessen Konstruktion im Vergleich zur herkömmlichen Konstruktion Vereinfachungen bei Herstellung und Wartung ermöglicht.

Diese Aufgabe wird durch den Gegenstand des Anspruchs 1 bzw. den Gegenstand des Anspruchs 6 gelöst.

Dadurch, daß die Unterwagenkonstruktion bei dem erfindungsgemäßen Kranfahrzeug sehr niedrig ausgeführt sein kann, lassen sich die Abmessungen des Kranmastes (Auslegers) größer wählen, was zu einer Steigerung der Tragfähigkeit führt, ohne daß dadurch die Gesamthöhe des Kranfahrzeuges gesteigert wird. Wie der Fachmann weiß, läßt sich bei einem Kranmast durch Vergrößerung der Höhe eine Steigerung der Biegefestigkeit, d.h. eine Steigerung der Belastbarkeit, erreichen. Die erzielbare Verringerung des Eigengewichtes im Bereich des Unterwagens beim erfindungsgemäßen Kranfahrzeug ermöglicht eine Steigerung des Eigengewichtes im Bereich des Oberwagens, insbesondere im Bereich des Kranmastes, ohne das Gesamtgewicht des Kranfahrzeuges zu erhöhen. Die durch die Erfindung erreichbare Verringerung des Eigengewichtes im Bereich des Unterwagens kann beispielsweise dafür genutzt werden, die in einem Kranausleger vorgegebener Bauhöhe unterbringbare Anzahl von teleskopierbaren Auslegerteilen zu erhöhen.

Es sei unterstrichen, daß die erfindungsgemäß gestaltete 4-Punkt-Abstützung nicht nur für Kranfahrzeuge des in dieser Anmeldung beschriebenen und dargestellten Typs geeignet ist, sondern auch für Kranfahrzeuge mit gänzlich anders gestaltetem Oberwagen. So kann dem Kranausleger eine ausfahrbare Feuerwehrleiter zugeordnet sein oder kann der Ausleger als ausfahrbare Feuerwehrleiter ausgestaltet sein. Ferner können am freien Auslegerende Aggregate, wie Arbeitsbühnen etc., vorgesehen sein.

Die 4-Punkt-Abstützung nach der Erfindung zeichnet sich dadurch aus, daß der bzw. die Abstützträger nicht in speziellen Abstützkästen untergebracht sind, sondern direkt im Fahrzeug-Längsrahmen aufgenommen sind. Im Fall von ausfahrbaren (teleskopierbaren) Abstützträgern hat es sich als besonders vorteilhaft herausgestellt, daß ein äußerer Abstützträger in Form eines Hohlkörpers im Fahrzeug-Längsrahmen angeordnet ist, sei es ortsfest oder verschieblich, und daß in diesem äußeren Abstützträger ein innerer Abstützträger verschieblich gelagert ist. Am äußeren freien Ende dieses inneren Abstützträgers ist ein Abstützzylinder mit Stützteller vorgesehen.

Die erfindungsgemäße Abstützung, die auf die herkömmlichen Abstützkästen verzichtet, führt zu beträchtlichen Gewichtsersparnissen, da die Krafteinleitungen auf Querkraft und Biegung optimiert werden können. Ferner ist die gesamte Anbindung der Abstützträger an den Fahrzeug-Längsrahmen vergleichsweise einfach herzustellen.

Bevorzugte Ausführungsformen der Erfindung sind in den Unteransprüchen angegeben.

Die Erfindung wird im folgenden anhand von Ausführungsbeispielen und unter Bezug auf die Zeichnung näher erläutert. In dieser zeigt:
- Fig. 1: eine schematisierte Seitenansicht eines vierachsigen Kranfahrzeuges,
- Fig. 2: eine schematisierte Draufsicht auf eine erste Ausführungsform der erfindungsgemäßen Abstützung,
- Fig. 3: eine schematisierte Draufsicht auf eine zweite Ausführungsform der erfindungsgemäßen Abstützung,
- Fig. 4: eine schematische Darstellung der mit Hilfe der in Fig. 2 dargestellten Ausführungsform erreichbaren unterschiedlich großen Abstützbasen,
- Fig. 5: eine perspektivische Darstellung der in Fig. 2 dargestellten Ausführungsform und
- Fig. 6: eine schematisierte Draufsicht auf eine herkömmlich gestaltete 4-Punkt-Abstützung.

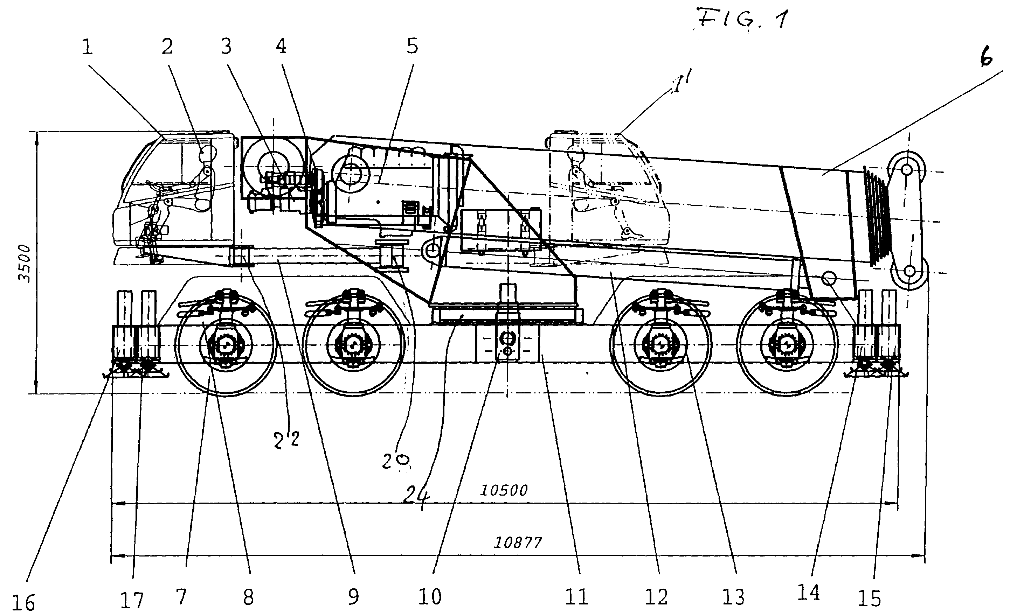

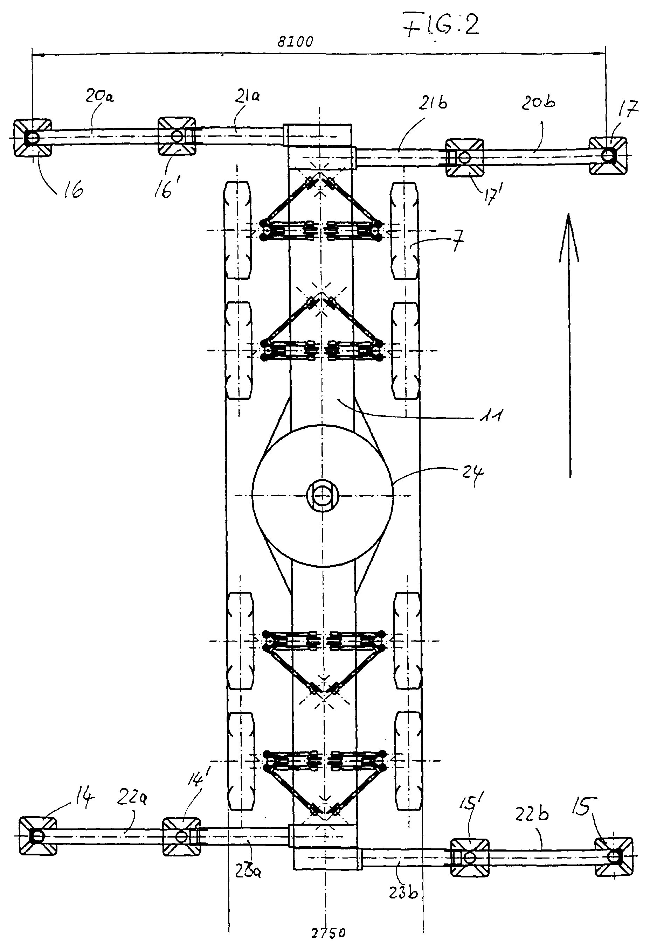

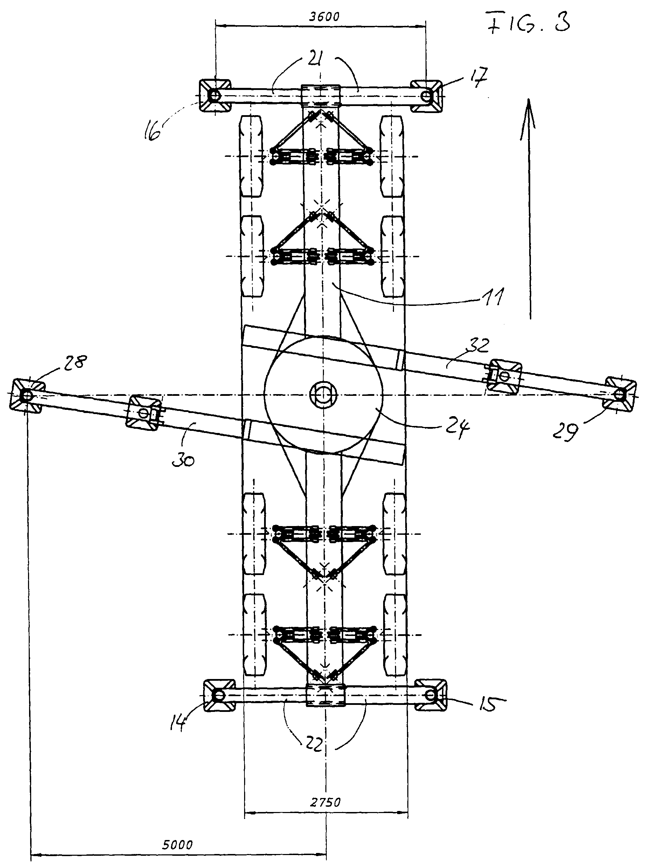

Fig. 1 zeigt ein vierachsiges Kranfahrzeug mit der erfindungsgemäßen Konstruktion, welches für eine maximale Traglast von 120 t ausgelegt ist und lediglich eine Gesamthöhe (im Fahrzustand) von 3,5 m und eine Gesamtlänge von 10,87 m aufweist. Die Breite des dargestellten Fahrzeugkranes beträgt < 3 m. Das Kranfahrzeug ist in seiner Fahrstellung dargestellt, wobei eine Kabine 1 in ausgezogener Strichführung in Fahrtrichtung vorne dargestellt ist. Im Rahmen der nachfolgenden Beschreibung bezeichnet "hinten" die der Fahrtrichtung entgegengesetzte Richtung, in welche in den Figuren 1 und 2 das äußere Auslegerende zeigt. Die Begriffe "links" und "rechts" werden in der folgenden Beschreibung in bezug auf die in den Figuren 2 und 3 mittels eines Pfeiles angedeutete Fahrtrichtung verwendet. Demzufolge sind die in Fig.1 dargestellten Fahrzeugräder auf der "linken" Fahrzeugseite vorgesehen.

In der Kabine 1 ist eine Bedienungsperson 2 dargestellt. Das Bezugszeichen 3 bezeichnet eine hydraulische Fahrpumpe und das Bezugszeichen 4 bezeichnet ein Pumpenverteilergetriebe. Ein mit dem Bezugszeichen 6 bezeichneter Kranmast (Ausleger) ist schwenkbar im vorderen Fahrzeugbereich gelagert, so daß das Auslegerende nach hinten weist. Im dargestellten Ausführungsbeispiel umfaßt der Kranmast ein Anlenkstück mit vielen darin aufgenommenen teleskopierbaren Teilen. Ein Motor 5 für Fahrbetrieb sowie für Kranbetrieb ist gleichfalls dargestellt.

Das Kranfahrzeug verfügt über vier Achsen, an welchen insgesamt acht Räder 7 befestigt sind. Jedes Rad ist einzeln mit einer mit dem Bezugszeichen 8 bezeichneten Radaufhängung an einem sich in Fahrzeuglängsrichtung erstreckenden Rahmen 11 aufgehängt. Jedes Rad 7 verfügt über einen eigenen schaltbaren Hydromotor, der in an sich bekannter Weise der Radnabe zugeordnet ist. Wenigstens ein Teil der Räder 7 ist mit Hilfe einer schematisch dargestellten Lenkeinrichtung lenkbar, wobei diese Lenkeinrichtung eine teilbare Lenkspindel aufweist. Diese teilbare Lenkspindel (nicht im einzelnen dargestellt) ist hydraulisch entriegelbar und verriegelbar und gewährleistet, daß ein mechanischer Lenkeingriff auf die lenkbaren Räder besteht, wenn sich das Kranfahrzeug auf öffentlichen Straßen bewegt. Die vorzugsweise in den Naben der Räder 7 integrierten Hydromotoren (hydrostatische Einzelradantriebe) benötigen keine Verbindung mit dem Fahrzeugrahmen 11 durch Achsen, Gelenkwellen oder dergleichen.

Die Kabine 1 ist zusammen mit der Pumpe, dem Verteilergetriebe sowie dem Motor und dem Kranmast 6 auf einer Drehbühne 18 gelagert, die schematisch als Vieleck in kräftiger Strichführung dargestellt ist. Auch das zum Aufrichten des Kranmastes benötigte Wippwerk 12 ist auf der Drehbühne gelagert.

Die Drehbühne ist auf einem drehbar im Fahrzeugrahmen 11 gelagerten Drehkranz 24 gelagert, so daß in an sich bekannter Weise die Gesamtheit des drehbaren Oberwagens von dem Drehkranz 24 gehaltert ist. Die Kabine 1 ist mit Hilfe eines Hauptdrehpunktes 20 und eines Schwenkarmes 9 horizontal verschwenkbar an der Drehbühne gelagert. Aus der in Fig. 1 linksseitig gezeigten Stellung für den Fahrbetrieb kann die Kabine 1 bis in die in den Fig. 1 rechtsseitig strichpunktiert gezeichnete Stellung verschwenkt werden. Zwischen der Stellung für den Fahrbetrieb und der mit dem Bezugszeichen 1' gezeichneten Extremstellung kann die Kabine 1 beliebig verschwenkt werden. Um bei jeder Zwischenstellung zwischen den beiden in den Figuren gezeigten Extremstellungen der Bedienungsperson ein genaues Beobachten des Kranmastes im Kranbetrieb zu gestatten, ist ein zusätzlicher Drehpunkt 22 vorgesehen. Dieser zusätzliche Drehpunkt 22 gestattet ein horizontales Verschwenken der Kabine, unabhängig von dem Verschwenken des Schwenkarmes 9 um den Hauptschwenkpunkt 20. Der zusätzliche Drehpunkt 22 verbindet zwei Teilabschnitte des Schwenkarmes 9 miteinander. Zumindest im Fahrbetrieb ist die Kabine 1 mit dem Fahrgestell (Fahrzeugrahmen 11) verbolzbar.

Die Oberkante des Drehkranzes 24 befindet sich auf einer relativ geringen Höhe und in jedem Fall unterhalb des höchsten Punktes der Bereifung der dem Fahrgestell zugeordneten Räder 7. Da Räder einschließlich Bereifung für Fahrzeugkrane häufig einen Durchmesser von 1,4 m haben, ergibt sich, daß die Oberkante des Drehkranzes 24 eine Höhe von etwa 1,30 m über der Aufstandsfläche der bereiften Räder aufweist. Wird für den Fahrzeugrahmen 11 eine Bodenfreiheit von 0,4 m zugrunde gelegt und für den Fahrzeugrahmen eine Höhe von 0,5 m angenommen, so ergibt sich für die untere Kante des Drehkranzes eine Höhe von etwa 0,9 m. Wird die Höhe des Drehkranzes mit 0,30 m angenommen, so ergibt sich für die Lage der Drehkranzoberkante eine Höhe von 1,20 m. Wird für das Wippwerk 12, welches zwischen der Oberkante des Drehkranzes und der Unterseite des Kranmastes angeordnet ist, eine Höhe von 0,4 m veranschlagt, so ergibt sich für die Oberkante des Wippwerkes eine Höhe von 1,6 m, was zur Folge hat, daß noch eine Höhe von 1,90 m, sei es für die Kabinenoberkante, sei es für die Kranmastoberkante, zur Verfügung steht, bevor eine Gesamtbauhöhe von 3,5 m erreicht wird. In Fig. 1 betragen die Abstände zwischen den Radachsen beispielsweise 1,7 m. In Fig. 1 beträgt der Abstand zwischen den beiden inneren Achsen 4,7 m und beläuft sich die Länge des Fahrzeugrahmens auf 10,5 m. Die Länge über alles ist in Fig. 1 mit 10,87 m angegeben. Es versteht sich, daß sich die genannten Abmessungen lediglich auf ein einziges Ausführungsbeispiel beziehen. Generell wichtig ist allein, daß die Drehkranzoberkante bei einem Fahrzeugkran für 120 t Traglast auf etwa 1,20 bis 1,30 m abgesenkt und gleichzeitig eine Gewichtsersparnis im Bereich des Unterwagens (Rahmen und Abstützung) erreicht werden kann.

Fig. 2 zeigt eine Aufsicht auf den Unterwagen eines Kranfahrzeuges mit einem Fahrzeug-Längsträger 11 sowie insgesamt vier Radpaaren 7. Der Bereich des Drehkranzes, auf welchem sich ein nichtdargestellter Oberwagen abstützt, ist mit dem Bezugszeichen 24 bezeichnet. Ein Pfeil bezeichnet die normale Fahrtrichtung des Kranfahrzeuges. Im Bereich des vorderen Endes des Fahrzeug-Längsrahmens 11 ist links von der Fahrzeug-Längsachse eine Abstützung 16 in Form eines schematisch dargestellten Abstützzylinders 16 und ist rechts von der Fahrzeug-Längsachse eine Abstützung 17 in Form eines schematisch dargestellten Abstützzylinders vorgesehen. Die Abstützzylinder 16 und 17 sitzen jeweils an den Enden eines verschieblichen inneren Stützträgers 20a bzw. 20b, welcher im Inneren eines äußeren Abstützträgers 21a bzw. 21b verschieblich gelagert ist. Wenn die inneren Abstützträger 20a bzw. 20b gänzlich in den äußeren Abstützträger 21a bzw. 21b eingefahren sind, nimmt der linke Abstützzylinder 16 die mit 16' bezeichnete Stellung ein und nimmt der Abstützzylinder 17 die mit 17' bezeichnete Stellung ein.

Analog zu den Abstützungsmaßnahmen am vorderen Ende des Fahrzeug-Längsrahmens 11 sind weitere Abstützmaßnahmen am hinteren Ende des Fahrzeug-Längsrahmens vorgesehen. Links von der Fahrzeug-Längsachse ist ein Abstützzylinder 14 und rechts von der Fahrzeug-Längsachse ist ein Abstützzylinder 15 vorgesehen. Diese beiden Abstützzylinder sind an den äußeren freien Enden von inneren Abstützträgern 22a bzw. 22b angeordnet. Diese beiden inneren Abstützträger sind verschieblich in äußeren Abstützträgern 23a bzw. 23b gelagert. Die am vorderen Rahmenende vorgesehenen äußeren Abstützträger 21a und 21b wie auch die am hinteren Rahmenende vorgesehenen äußeren Abstützträger 23a und 23b sind direkt im Fahrzeuglängsträger gelagert, ohne daß es eines herkömmlichen Abstützkastens bedarf. Werden die am hinteren Rahmenende vorgesehenen inneren Stützträger 22a bzw. 22b soweit als möglich in die äußeren Abstützträger 23a bzw. 23b hineingefahren, so nehmen die Abstützzylinder 14 bzw. 15 die in Fig. 2 mit dem Bezugszeichen 14' und 15' bezeichneten Betriebsstellungen ein.

Wie in Fig. 2 angegeben, wird beim dargestellten Ausführungsbeispiel eine maximale Abstützungsbasis von 8,1 m erreicht bei einer Gesamt-Fahrzeugbreite von 2,75 m.

Wird auf die ausschiebbaren inneren Abstützträger 20a, 20b, 22a, 22b verzichtet und werden die Abstützzylinder 14, 15, 16, 17 an den freien Enden der äußeren Abstützträger 21a, 21b, 23a, 23b vorgesehen, so kann eine Basis von im wesentlichen Fahrzeugbreite erzielt werden.

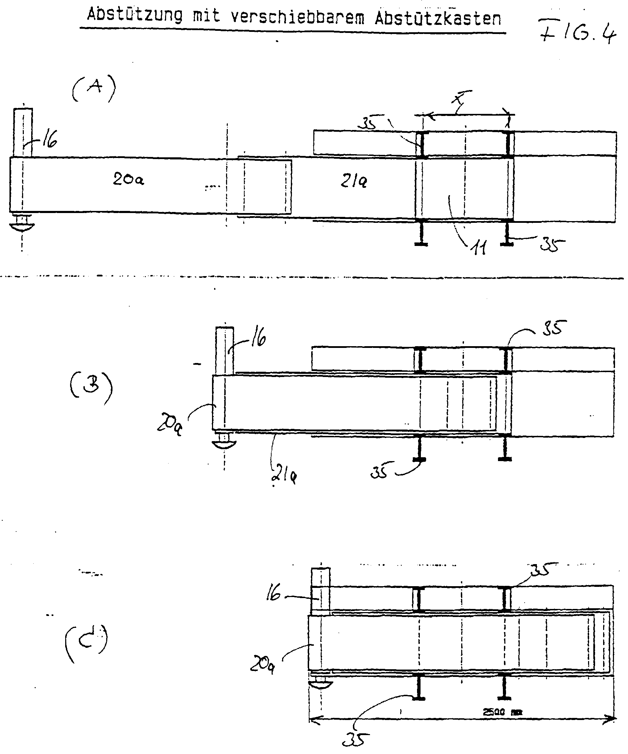

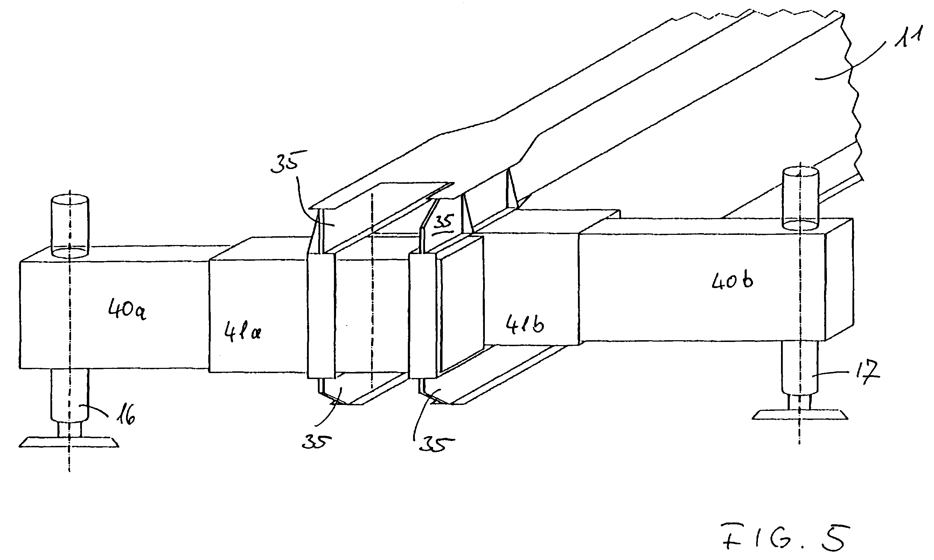

Wie anhand von Figuren 4 und 5 noch näher erläutert, können die vorstehend genannten äußeren Abstützträger ihrerseits verschieblich im Fahrzeug-Längsrahmen gelagert sein. Für alle im Rahmen dieser Erfindung in den Endabschnitten des Fahrzeug-Längsrahmens vorgesehenen Abstützträger gilt, daß sie in Querrichtung zur Fahrzeug-Längsachse angeordnet bzw. ausschiebbar sind.

Die in Fig. 3 dargestellte Ausführungsform unterscheidet sich, was die an den beiden Enden des Fahrzeugrahmens vorgesehenen Abstützungen angeht, dadurch von der in Fig. 2 dargestellten Ausführungsform, daß gemäß Fig. 3 die an ihren freien Enden mit Abstützzylindern 14, 15, 16, 17 versehenen Abstützträger 21 und 23 nicht ausschiebbar sind. Diese quer zur Fahrzeug-Längsachse angeordneten Abstützträger 21 und 22 sind direkt im Fahrzeug-Längsträger 11 gelagert. Die in Fig. 3 dargestellten Stützträger 21 und 22 mit Fix-Längen können einstückig ausgebildet sein oder, wie in Fig. 3 schematisch dargestellt, im Bereich des Fahrzeug-Längsrahmens 11 ineinandergesteckt sein. Gemäß Fig. 3 haben die links von der Fahrzeug-Längsachse angeordneten Abstützträger 21 bzw. 22 einen geringeren Durchmesser als die auf der rechten Fahrzeugseite dargestellten Abstützträger, so daß die Endbereichsabschnitte der jeweils linken Träger in die Endbereichsabschnitte der jeweils rechten Träger hineingesteckt sein können.

Fig. 3 zeigt außerdem als bevorzugte Ausführungsform im Bereich der Lagerung des Drehkranzes 24 einen linken Abstützholm 30 und einen rechten Abstützholm 32, wobei diese beiden Abstützholme ineinander in entgegengesetzten Richtungen nach links bzw. nach rechts hydraulisch ausfahrbar sind. Diese beiden Abstützholme 30 und 32 sind im Bereich der Drehkranzlagerung im Fahrzeug-Längsrahmen 11 gelagert. Wie schematisch dargestellt, lassen sich die beiden Abstützholme 30 und 32 zwischen einer völlig eingefahrenen und einer maximal ausgefahrenen Stellung beliebig weit ausfahren. Im völlig ausgefahrenen Zustand läuft eine gedachte Verbindungsgerade zwischen den Mittelpunkten der an diesen beiden letztgenannten Holmen angebrachten Abstützzylinder 28 und 29 durch den Mittelpunkt des Drehkranzes 24, wie in Fig. 3 strichpunktiert dargestellt.

Im in Fig. 3 dargestellten Ausführungsbeispiel wird mit den beiden Permanent-Abstützträgerlängen eine Abstützbasis von 3,6 m, bei einer mit Hilfe der beiden zusätzlichen Abstützholme 30 und 32 wird eine Abstützbasis von 10 m erreicht.

Fig. 4 zeigt schematisch die mit Hilfe der erfindungsgemäß ausgestellten 4-Punkt-Abstützung erreichbare Variation der Abstützbasis.

Fig. 4A zeigt schematisch eine im wesentlichen den Gegebenheiten in Fig. 2 entsprechende Ausgestaltung der Erfindung. Dargestellt sind ein äußerer Abstützträger 21a sowie ein innerer Abstützträger 20a, wobei der letztgenannte Abstützträger innerhalb des äußeren Abstützträgers verschieblich gelagert ist. Am äußeren freien Ende des inneren Abstützträgers 20a ist ein schematisch mit dem Bezugszeichen 16 bezeichneter Abstützzylinder mit daran hängendem Abstützteller dargestellt. Der äußere Abstützträger 21a ist innerhalb des Fahrzeug-Längsrahmens 11 verschieblich. Es versteht sich, daß rechts vom Längsrahmen 11 eine Anordnung entsprechend den Abstützträgern 21b und 20b gemäß Fig. 2 vorhanden ist.

Fig. 4A zeigt die maximale Abstützbasis, die mit Hilfe der erfindungsgemäßen 4-Punkt-Abstützung erreicht werden kann.

In Fig. 4B ist die Situation dargestellt, in welcher der innere Abstützzylinder 20a gänzlich in den äußeren Abstützzylinder 21a eingefahren ist. Wiederum ist auf der rechten Bildseite die Abstützanordnung 21b, 20b (Fig. 2) nicht dargestellt.

Es ist aus Fig. 4B deutlich ersichtlich, daß sich durch Einfahren des inneren Abstützzylinders 20a in den äußeren Abstützzylinder 21a eine Reduzierung der Abstützbasis auf etwa 50 % erreichen läßt.

Fig. 4C zeigt die Situation, in welcher nicht nur der innere Abstützträger 20a gänzlich im äußeren Abstützträger 21a aufgenommen ist, sondern in welcher zudem der äußere Abstützträger 21a seine maximal in den Fahrzeug-Längsrahmen eingefahrene Stellung eingenommen hat. In dieser in Fig. 4C dargestellten Stellung hat die Abstützbasis ihre geringste Abmessung erreicht und definiert somit die Fahrzeugbreite von beispielsweise 2,5 m. Auch in Fig. 4C hat man sich rechts eine der Anordnung 21b/20b in Fig. 2 entsprechende Ausbildung vorzustellen.

Mit dem Bezugszeichen 35 sind in Fig. 4 jeweils Querkraft-Biegeträger bezeichnet, auf welche anhand von Fig. 5 noch näher eingegangen werden wird. Der in Fig. 4A mit x bezeichnete Maßpfeil bezeichnet die Breite des Fahrzeug-Längsrahmens 11.

Fig. 5 zeigt eine bevorzugte Ausführungsform für die Anordnung und Abstützung zweier ausfahrbarer Abstützträger in einem Fahrzeug-Längsrahmen 11. Dargestellt sind ein linksseitiger Abstützzylinder 16 und ein rechtseitiger Abstützzylinder 17, die an den freien Enden eines inneren Abstützträgers 40a bzw. 40b vorgesehen sind. Der innere Abstützträger 40a ist in einem äußeren Abstützträger 41a verschieblich gelagert und der innere Abstützträger 40b ist in einem äußeren Abstützträger 41b verschieblich gelagert. Die beiden äußeren Abstützträger 41a und 41b sind in einer Öffnung im Fahrzeug-Längsrahmen 11 verschieblich aufgenommen, wobei die Abstützträger 41a, 41b in Richtung des Fahrzeug-Längsrahmens 11 hintereinander und parallel zueinander gelagert sind.

Die Einspannteile der Träger 41a und 41b sind in der Verlängerung der Stegbleche des Fahrzeug-Längsrahmens 11 angeordnet. Biegemomente, welche sich aus den Anlagekräften der Abstützträger ergeben, wirken in diesem Trägerverbund gegeneinander. In den Fahrzeug-Längsrahmen wird großflächig in die Stege sowie in den Untergurt und Obergurt nur noch das resultierende Restbiegemoment sowie die Querkraft eingeleitet. Durch die nebeneinanderliegenden Querkraft-Biegeträger 35 wird der geschlossene Rahmen mit der Querkraft, dem Biegemoment und dem Torsionsmoment belastet.

Durch die Zugverbindung an der Stirnseite und zwischen den Trägern 41a und 41b und den Querkraft-Biegeträgern 35 wird durch die entgegengesetzte Krafteinleitung durch den Träger 41a bzw. den Träger 41b teilweise eine Kompensation der Verformungskräfte erreicht.

Die in Fig. 5 dargestellte Betriebsstellung einer erfindungsgemäßen Abstützung entspricht im wesentlichen der maximal voneinander entfernten Abstützbasis, wie diese in den Figuren 2 sowie 4A dargestellt ist. Würde man in Fig. 5 die beiden inneren, mit den Abstützzylindern verbundenen Abstützträger 40a bzw. 40b soweit als möglich in die jeweiligen äußeren Abstützträger 41a bzw. 41b hineinfahren, so würde im wesentlichen die in Fig. 4B dargestellte Abstützsituation mit einer Abstützbasis von lediglich 50 % verwirklicht sein. Würde man die äußeren Abstützträger 41a und 41b aus ihrer in Fig. 5 gezeigten Stellung jeweils in Richtung auf die Fahrzeug-Längsachse verschieben, so würde eine Situation erreicht werden, in welcher die beiden äußeren Abstützträger 41a und 41b hintereinander zu liegen kämen, wobei ihre Mitte halbierend jeweils hintereinander und in der Ebene der in Fig. 5 gestrichelt dargestellten Mittelsenkrechten des Fahrzeug-Längsrahmens 11 liegen würde. In einer solchen Situation liegen die Enden der beiden Abstützträger 41a und 41b jeweils in der gleichen Ebene und sind die inneren Abstützträger 40a und 40b maximal in die beiden äußeren Abstützträger hineingezogen, wodurch sich die in Fig. 4C dargestellte Situation ergibt, in welcher die beiden Abstützzylinder 16 und 17 die Fahrzeugbreite definieren.

## Patentansprüche

1. Kranfahrzeug mit einem Fahrgestell, welches einen in der Fahrzeug-Längsachse vorgesehenen Fahrzeugrahmen (11) aufweist, mit einem teleskopierbaren Kranmast sowie mit einer teils dem vorderen Ende des Fahrzeugrahmens (11) und teils dem hinteren Ende des Fahrzeugrahmens zugeordneten 4-Punkt-Abstützung für den Kranbetrieb, welche an Abstützträgern gehalterte Abstützzylinder (14 bis 17) aufweist, wobei im Fahrbetrieb der Kranmast nach hinten weisend ablegbar ist, **dadurch gekennzeichnet**, daß die 4-Punkt-Abstützung sich quer zur Fahrzeug-Längsachse erstreckende Abstützträger (21, 23, 41) aufweist, die direkt im Fahrzeug-Längsrahmen (11) gelagert sind.

2. Kranfahrzeug nach Anspruch 1, **dadurch gekennzeichnet**, daß die Kabine (1) am ersten Ende eines Schwenkarms (9) befestigt ist, dessen zweites Ende mit Hilfe eines ersten Drehpunktes (20) verschwenkbar am Kranoberwagen gelagert ist.

3. Kranfahrzeug nach Anspruch 2, **dadurch gekennzeichnet**, daß zwischen dem ersten Drehpunkt (20) und dem ersten Ende des Schwenkarmes (9) ein zweiter Drehpunkt (22) zum Verschwenken der Kabine (1) vorgesehen ist.

4. Kranfahrzeug nach Anspruch 2 oder 3, **dadurch gekennzeichnet**, daß die Kabine (1) aus ihrer Stellung für den Fahrbetrieb, in welcher sie in Fahrtrichtung vor dem Kranmast (6) angeordnet ist, bis etwa 180° nach hinten bis neben dem Kranmast (6) verschwenkbar ist.

5. Kranfahrzeug nach einem der Ansprüche 1 bis 4, **dadurch gekennzeichnet**, daß die Kabine (1) in ihrer Stellung für den Fahrbetrieb fixierbar ist.

6. Kranfahrzeug nach Anspruch 1, **dadurch gekennzeichnet**, daß die Abstützträger zweigeteilt sind und einen im Fahrzeug-Längsträger (11) gelagerten äußeren Träger (21a, 21b, 23a, 23b, 41a, 41b) sowie einen längsverschieblich in diesen äußeren Träger gelagerten inneren Träger (20a, 20b, 22a, 22b, 40a, 40b) aufweisen, wobei die Abstützzylinder (14 - 17) jeweils am freien Ende der inneren Träger angeordnet sind.

7. Kranfahrzeug nach Anspruch 6, **dadurch gekennzeichnet**, daß der äußere Träger (21a, 21b, 23a, 23b, 40a, 40b) längsverschieblich im Fahrzeug-Längsrahmen (11) gelagert ist.

8. 4-Punkt-Abstützung für Kranfahrzeuge, wobei vier an Abstützträgern gehalterte Abstützzylinder (14 - 17) vorgesehen sind, **dadurch gekennzeichnet**, daß die 4-Punkt-Abstützung sich quer zur Fahrzeug-Längsachse erstreckende Abstützträger (21, 23, 41) aufweist, die direkt im Fahrzeug-Längsrahmen (11) gelagert sind.

9. 4-Punkt-Abstützung nach Anspruch 8, **dadurch gekennzeichnet**, daß die Abstützträger zweigeteilt sind und einen im Fahrzeug-Längsträger (11) gelagerten äußeren Träger (21a, 21b, 23a, 23b, 41a, 41b) sowie einen längsverschieblich in diesem äußeren Träger gelagerten inneren Träger (20a, 20b, 22a, 22b, 40a, 40b) aufweisen, wobei die Abstützzylinder (14 - 17) jeweils am freien Ende der inneren Träger angeordnet sind.

10. 4-Punkt-Abstützung nach Anspruch 8, **dadurch gekennzeichnet**, daß die äußeren Träger (21a, 21b, 23a, 23b, 40a, 40b) längsverschieblich im Fahrzeugrahmen (11) gelagert sind.

11. Kranfahrzeug nach Anspruch 1, **dadurch gekennzeichnet**, daß die Oberkante des Drehkranzes (24) unterhalb des höchsten Punktes der Bereifung der den Fahrgestell zugeordneten Räder (7) liegt, wobei die Reifengröße 14⁰⁰R25 zugrunde gelegt ist.

12. Kranfahrzeug nach Anspruch 1, **dadurch gekennzeichnet,** daß die Kabine sowohl für den Fahrbetrieb mit einer Geschwindigkeit von mehr als 62 km/h auf der Straße als auch für den Kranbetrieb vorgesehen ist, wobei diese Kabine verschwenkbar am Kranoberwagen gelagert und aus einer für den Fahrbetrieb auf der Straße vorgesehenen Stellung in eine Vielzahl von allein dem Kranbetrieb vorbehaltenen Stellungen verschwenkbar ist.

13. Kranfahrzeug nach Anspruch 1, **dadurch gekennzeichnet**, daß im Fahrbetrieb der Kranmast nach hinten weisend ablegbar ist, so daß im Fahrbetrieb die Kabine (1) dem vorderen Rahmenende zugordnet ist, wohingegen die Spitze des Kranmastes (6) dem hinteren Rahmenende zugeordnet ist.
